# EUROPEAN PATENT SPECIFICATION

(11) **EP 4 422 888 B1**
(45) Date of publication and mention of the grant of the patent: **25.03.2026**
(21) Application number: 22812936.7
(22) Date of filing: 25.10.2022
(51) Int. Cl.: B60C 25/05, B60C 25/138

(54) **TIRE HOOK ASSEMBLY FOR TIRE CHANGER**
HAKENFÖRMIGE ANORDNUNG FÜR EINEN REIFEN BEI EINER REIFENWECHSELMASCHINE
DISPOSITIF DE CROCHET POUR UN PNEU SUR UN APPAREIL DE CHANGEMENT DE PNEUS

(30) Priority: 26.10.2021 US 202163272024 P
(43) Date of publication of application: 04.09.2024
(60) Divisional application: 25217880.1
(73) Proprietor: HUNTER ENGINEERING COMPANY, St. Louis, MO 63044 (US)
(72) Inventor: OLSEN, Michael, St. Louis, Missouri 63367 (US); DIERKING, Joshua, Leslie, Missouri 63056 (US)
(74) Representative: Ström & Gulliksson AB
(86) International application number: PCT/US2022/047716
(87) International publication number: WO 2023/076258

(56) References cited:
- EP-A1- 2 463 125
- EP-A1- 2 599 648
- EP-A1- 3 865 321
- CN-U- 202 935 102
- US-A1- 2012 061 028

## Description

### CROSS-REFERENCE TO RELATED APPLICATIONS

The present application is related to, and claims priority from, copending U.S. Provisional Patent Application Serial No. 63/272,024 filed on October 26, 2021.

### STATEMENT REGARDING FEDERALLY SPONSORED RESEARCH

Not Applicable.

### BACKGROUND OF THE INVENTION

The present application is directed generally towards a tire changer demount tool assembly and tire demounting procedure, and in particular, towards a tire demount tool assembly configured to automatically orient towards a tire and wheel assembly, which includes a linearly driven demount tool biased to traverse a predetermined path of motion during a tire demount procedure.

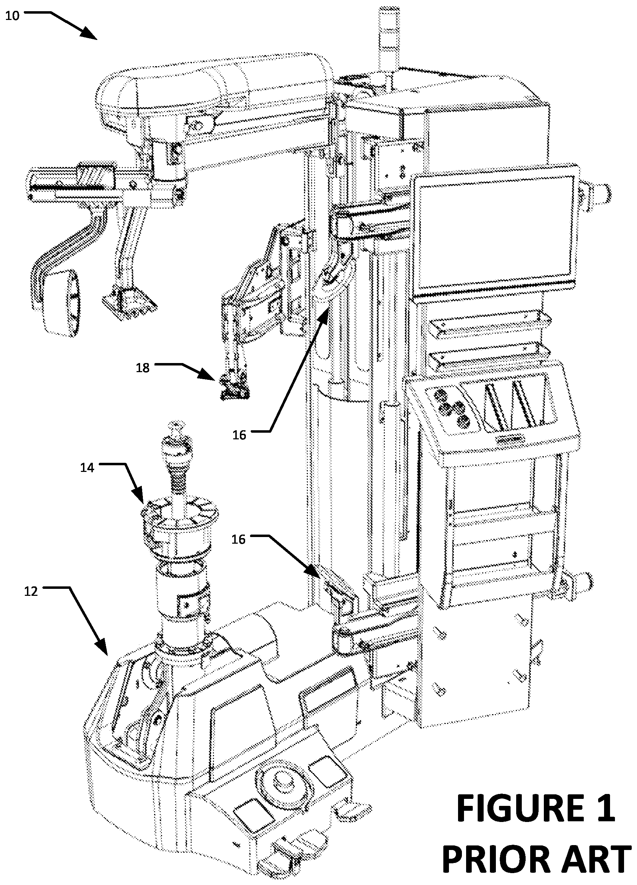

The process of removing a tire from a wheel rim and replacing it with another tire, referred to herein as tire changing, can be difficult due to the forces required to stretch and draw a tire bead over the edges of a wheel rim. In response to such difficulties, machines have been developed to facilitate the tire changing process. These tire changing machines 10, such as shown in Figure 1, commonly include a base 12 supporting a clamping mechanism and drive assembly 14 that rotates a wheel rim about a rotational axis when the drive assembly 14 and wheel rim are located at a working position on the tire changer 10. One or more bead breaker tools 16 (typically upper and lower tools) exerts pressure on the tire adjacent to the wheel rim to break loose the tire bead seal. A tire removal tool, sometimes referred to as a demount tool or tire hook 18, is used to pull the bead of the tire off the wheel rim as the wheel rim is rotated about the axis by the drive assembly, allowing the tire to be separated from the rim for removal. These tools 16 and 18 may be utilized in the reverse process of mounting a tire onto the wheel rim. While known tire changing machines 10 have obtained a level of success in reducing the time and labor associated with changing a tire, there remains room for improvement, such as in cost efficient construction and increased safety measures for the operator.

EP2599648A1, EP2463125A1, CN202935102U, EP3865321A1, and US2012061028A1 disclose prior art tire changers.

### BRIEF SUMMARY OF THE INVENTION

In one embodiment of the present invention, tire changer machine for changing a tire on a wheel rim, comprises a base, a drive assembly, a support column. A tool arm is coupled to the support column in a fixed orientation towards the drive assembly. A tool assembly is pivotally coupled to the tool arm by a mounting bracket. A guide member is rigidly coupled to the mounting bracket at a first end, and carries a demount tool assembly constrained for linear motion along a portion of the guide member. The demount tool assembly supports a tire demount tool for pivoting movement about a pivot axis, and for sliding contact with a mount / demount head located at a second end of the guide member. The demount tool is held in a retracted position when the demount tool assembly is linearly positioned adjacent to the first end of the guide member, and is biased to rotate about the pivot axis towards an extended position relative to the mount/demount head as the demount tool assembly linearly moves along the guide member towards the second end.

According to the present invention, the drive assembly is configured for linear movement between a wheel assembly mounting position and a working position responsive to a diameter of the wheel assembly, along a movement path offset from the support column. To accommodate tire and wheel rim combinations of differing diameters, the support column is configured for rotational movement about a vertical axis to orient the tool assembly in an operative position responsive to the diameter of the tire and wheel rim combination located in the working position.

The foregoing features, and advantages set forth in the present invention as well as presently preferred embodiments will become more apparent from the reading of the following description in connection with the accompanying drawings.

### BRIEF DESCRIPTION OF THE SEVERAL VIEWS OF THE DRAWINGS

In the accompanying drawings which form part of the specification:
Figure 1 is a perspective view of a prior art tire changing system;
Figure 2 is a perspective view of a tire changing system of the present invention;
Figure 3 is a perspective view of a tool support and tool assembly of Fig. 2;
Figure 4 is a side plan view of the tool assembly of Fig. 3, with the demount tool in a retracted position;
Figure 5 is a perspective view of the tool assembly of Fig. 3;
Figure 6 is a side plan view of the tool assembly of Fig. 3, with the demount tool in an extended position for engaging a tire bead;
Figure 7 is a perspective view of the tool assembly of Fig. 6;
Figure 8 is a simplified top view illustrating a configuration of said tool assembly, tool arm, and steering linkage relative to a minimum diameter wheel assembly carried by said drive assembly; and

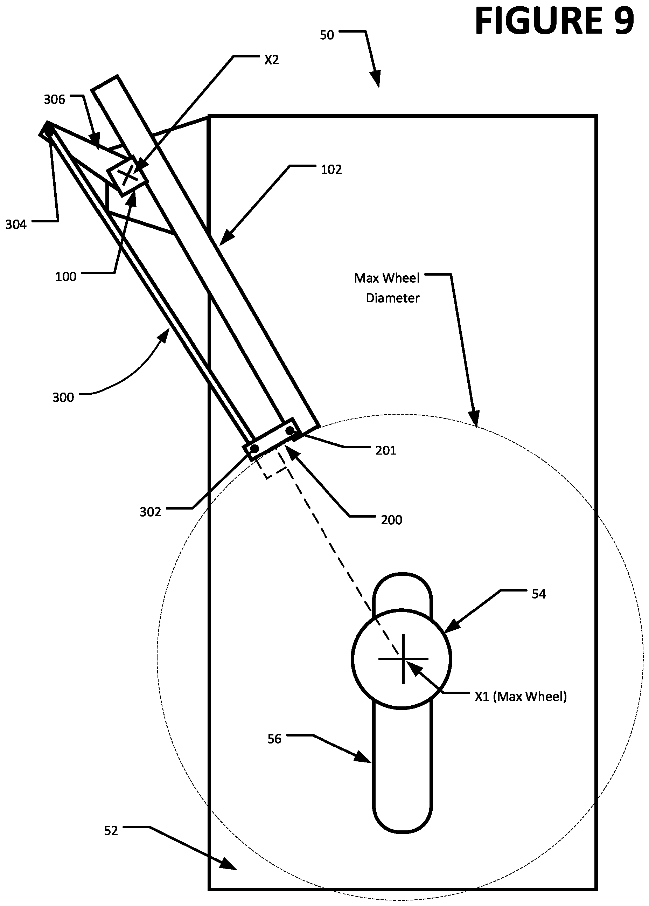

Figure 9 is a simplified top view illustrating a configuration of said tool assembly, tool arm, and steering linkage relative to a maximum diameter wheel assembly carried by said drive assembly.

Corresponding reference numerals indicate corresponding parts throughout the several figures of the drawings. It is to be understood that the drawings are for illustrating the concepts set forth in the present invention and are not to scale.

Before any embodiments of the invention are explained in detail, it is to be understood that the invention is not limited in its application to the details of construction and the arrangement of components set forth in the following description or illustrated in the drawings. The scope of the invention is only limited by the appended claims.

### DETAILED DESCRIPTION

The following detailed description illustrates the invention by way of example and not by way of limitation. The description enables one skilled in the art to make and use the present invention, and describes several embodiments, adaptations, variations, alternatives, and uses of the present invention, including what is presently believed to be the best mode of carrying out the present invention.

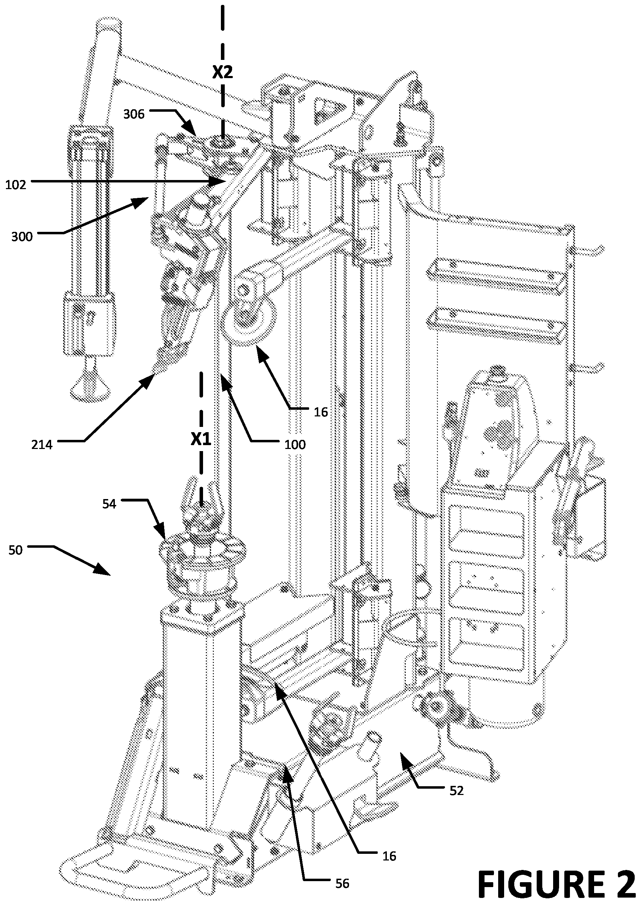

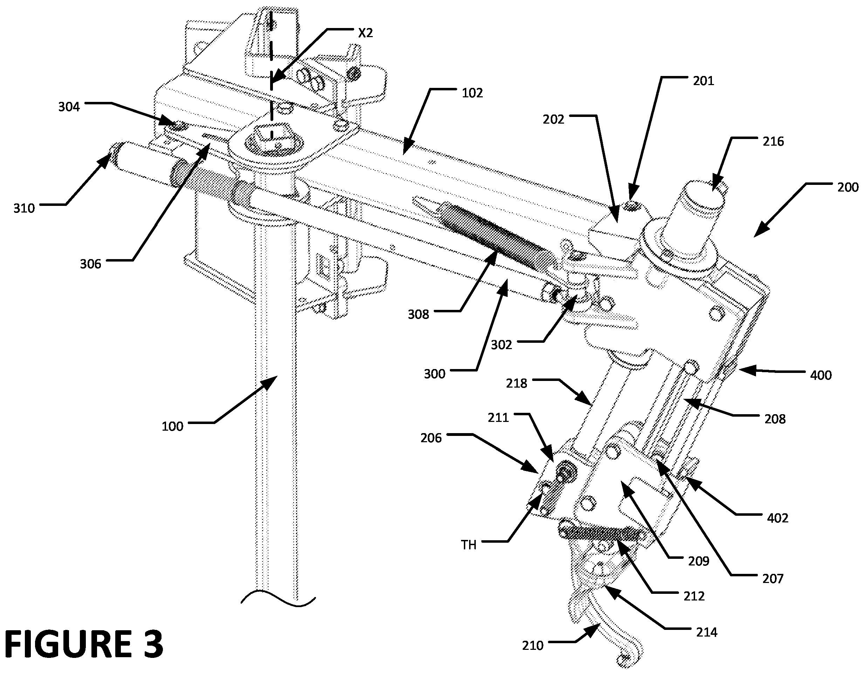

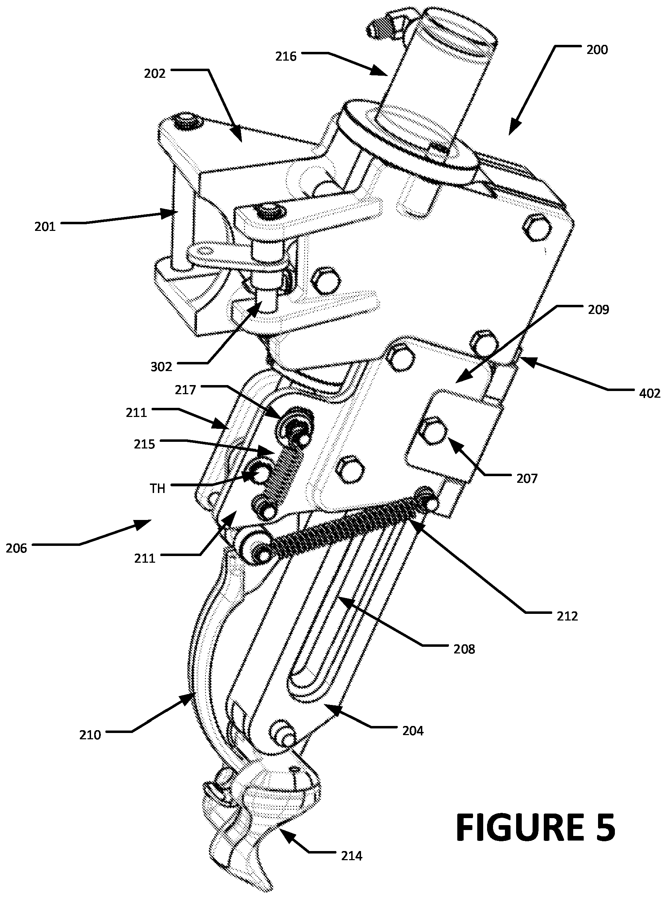

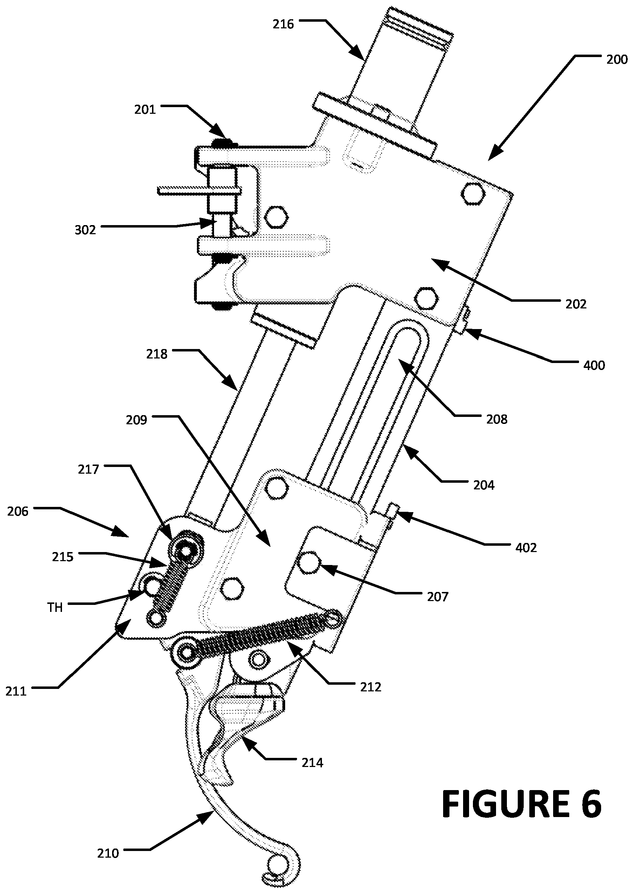

In one embodiment of the present invention shown in Fig. 2, a tire changer machine 50 for changing a tire on a wheel rim, comprises a base 52 and a drive assembly 54 movable along a predetermined linear path 56 on the base 52 and configured to rotate a wheel assembly around a vertical drive axis X. At least one support column 100 is coupled to the base 52 and is rotatable about a second vertical axis X2, parallel to the vertical drive axis X1 of the drive assembly 54. A tool arm 102, shown in Fig. 2, is secured to the support column 100 in a fixed orientation relative there to, within an operative range of the wheel assembly secured to the drive assembly. A tool assembly 200, shown in Figs. 3-6, is coupled to the tool arm 102 by a pivot 201 which is aligned parallel to the support column 100, and which passes through a mounting bracket 202. The mounting bracket 202 rigidly secures a first end of a guide member 204 at an angle relative to a longitudinal axis of the tool arm 102 and the vertical axis Y of the support column 100. The guide member 204 in turn supports a demount tool assembly 206 having a demount tool 210 (tire hook) configured for generally vertical movement along an arcuate path to engage a tire bead of the wheel assembly during a tire demounting procedure.

Movement of the demount tool 210 is constrained by a controlled linear motion of the demount tool assembly 206 along the length of the guide member 204, as well as a spring-biased sliding contact the demount tool 210 against a mount/demount head 214 secured to a second end of the guide member 204, opposite from the mounting bracket 202. In the embodiment shown in Figures 2-6, the linear motion of the demount tool assembly 206 is constrained by a portion of the guide member 204, such as a track, linear slot, or channel 208 integrally formed into the guide member 204. For example, the demount tool assembly 206 as shown incorporates one or more rollers 207 which each pass between opposite outer flange plates 209 of the demount tool assembly 206, through the channel 208, to secure the demount tool assembly 206 for sliding motion along the guide member 204.

The demount tool 210 is a curved member configured with a rounded hook at a working end for engaging and retaining a tire bead during a tire demount procedure. The opposite end of the demount tool 210 is supported between a pair of inner flange plates 211 about a pivot axis TH, spaced apart from the guide member 204. At least one spring 212, coupled between a connector on the demount tool 210 adjacent the pivot axis TH, and a second connector on the outer flange plate 209 biases the tire hook 210 towards a tire-engaging position in which the demount tool 210 extends below the mount / demount head 214, as shown in Figs. 2, 5, and 6. When the demount tool assembly 206 is linearly moved along the guide member 204 towards the first end, the demount tool 204 is retracted towards a rest position as seen in Figures 3-4 by a sliding contact with the mount / demount head 214 and a bias force exerted by at least one second spring 215 coupled between the inner flange plate 211 and a retention pin 217 passing through an elongated slot in the flange plate 211 to engage an actuator shaft 218. The springs 212 act to bias the demount tool 204 against the mount / demount head 214 throughout the range of motion permitted by the linear movement and engagement with the guide member 204, while the springs 215 act to bias the demount tool 204 into a vertically withdrawn position against the mount / demount head 214 when the demount tool assembly 206 is in the rest position.

Linear movement of the demount tool assembly 206 along the guide member 204 is imparted by a linear actuator 216 secured to the mounting bracket 202. The linear actuator 216 includes an actuator shaft 218 extending parallel to the guide member 204 and coupled to the inner flanges 211 by the spring-biased retention pin 217. Exemplary linear actuators include hydraulic or a pneumatic cylinders, however, electronic or mechanical mechanisms with or without an actuator shaft, but which are configured to enable controlled bi-directional movement of the demount tool assembly 206 along the guide member 204 are contemplated within the scope of the present invention.

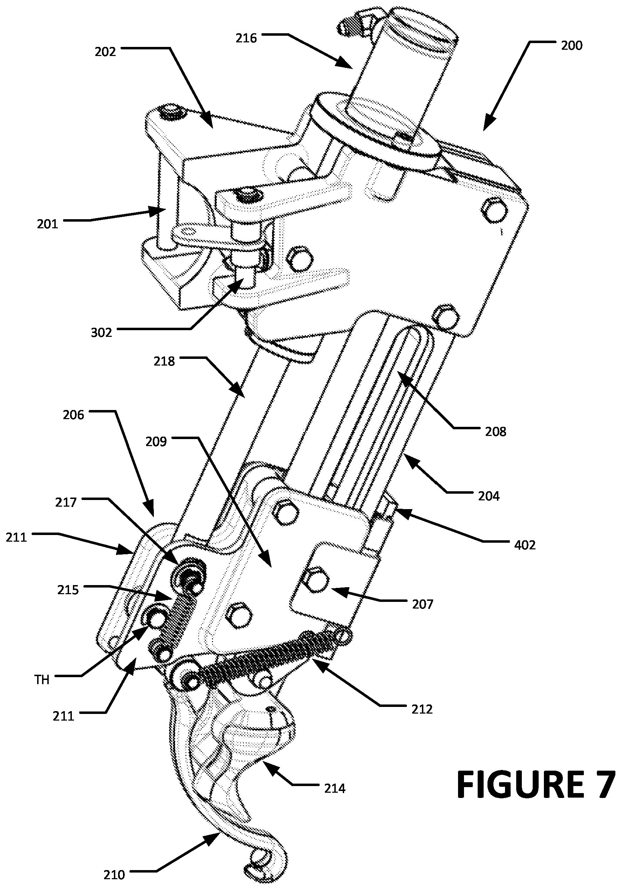

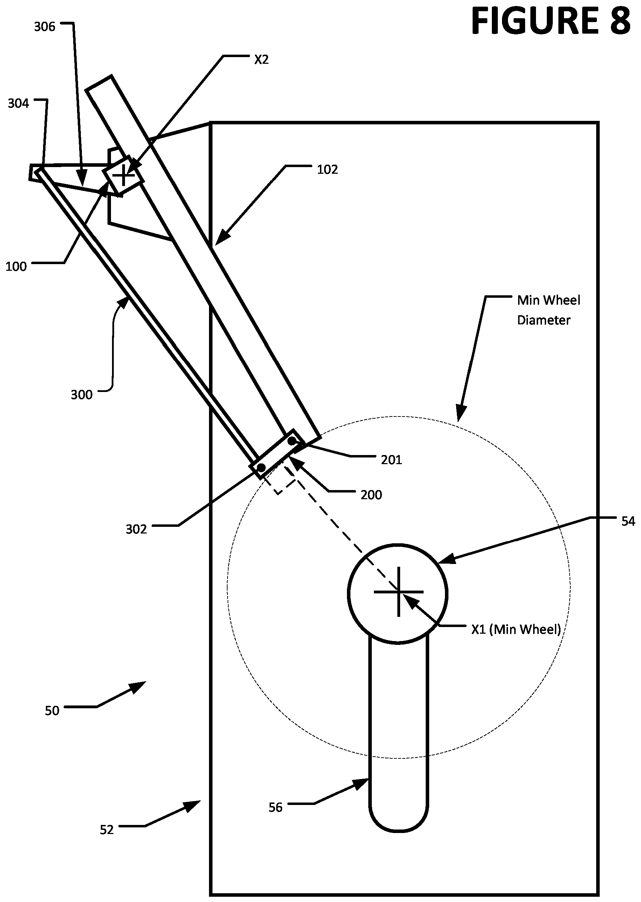

In a further embodiment of the present invention, the drive assembly 54 supporting the wheel assembly during a tire change operation is configured for predetermined movement between a wheel assembly loading position and a wheel assembly working position, along the linear path 56 offset from the support column 100. In the loading position, the drive assembly 54, including a spindle and flange for receiving the wheel assembly, is located adjacent to the front of the base 52, providing an operator with easy access for either securing or removing a tire and wheel assembly. After a wheel assembly is secured in place, the drive assembly 54 is moved to the wheel assembly working position, bringing the wheel assembly into the operative range of the various tire handling tools, such as the demount tool 210 and the mount / demount head 214. To accommodate wheel assemblies having different diameters of tire and rim combinations, the wheel assembly working position of the drive assembly 54 rotational axis varies in accordance with at least one dimension of the wheel assembly, such as an outer diameter of the tire, as seen in Figures 7 and 8.

Proper operation of the tools carried on the tool assembly 200 requires that the tools be oriented towards the working position of the drive assembly rotational axis for a given wheel assembly combination of tire and rim. Since the tool arm 102 is secured at a fixed orientation, it becomes necessary to alter the orientation of the tool assembly 200 relative to the longitudinal axis of the tool arm 102 in order to maintain the required orientation of the tool assembly 200 relative to the given wheel assembly. As seen in Figure 2, the mounting bracket 202 of the tool assembly 200 is secured to the tool arm 102 by the pivot 201, which permits the tool assembly 202 to rotate about an axis oriented perpendicular to the longitudinal axis of the tool arm 102. Rotation about the axis of pivot 201 enables the tool assembly 200 to adjust a facing orientation of the mount / demount head 214 and tire hook 210 towards the drive assembly rotational axis X, as required to accommodate wheel assemblies of different sizes as shown in Figures 7 and 8. Adjustment of the tool assembly 200 facing orientation towards the drive assembly rotational axis X may be done manually by an operator, or may be automated.

In an embodiment of the present invention, the adjustment of the tool assembly 200 facing orientation is facilitated by a mechanical system consisting of a steering linkage 300 coupling between a first pivot 302 on the mounting bracket 202 of the tool assembly 200, and a second pivot 304 located on an offset arm 306 affixed to, and rotating with, the support column 100. A bias spring 308 as shown in Fig. 2 acts to bias the tool assembly 200 towards the steering linkage 300. With pivot 201 in a fixed position at the end of the tool arm 102, rotation of the support column carrying the offset arm 306 moves the second pivot 304 along a first arcuate path about the axis Y of the support column in response to rotation of the offset arm 306, which in turn causes the steering linkage 300 to move the first pivot 302 along a second arcuate path about the pivot 201, changing the facing orientation of the tool assembly 200. Fine adjustments to the facing orientation of the tool assembly 200, for calibration purposes, are enabled by altering the length of the steering linkage 300, such as by means of a threaded coupling 310 as shown in Fig. 2.

Coordinating the rotation of the support column 100 with the position of the drive assembly 54, such as by a mechanical linkage, interconnection, or a rotational drive under control of a logic circuit, ensures that the facing orientation of the tool assembly 200 remains aligned with the drive assembly rotational axis X in the working positions for wheel assemblies of different sizes. In one embodiment of the present invention, the support column 100 is physically coupled by a jointed mechanical linkage to a carriage assembly conveying the drive assembly 54 along the linear path 56. As the carriage assembly moves the drive assembly 54 along the linear path, the jointed mechanical linkage causes the support column 100 to rotate proportionally around axis Y. Those of ordinary skill in the art will recognize that a variety of mechanical, pneumatic, hydraulic, or electrical actuator elements may be utilized without departing from the scope of the invention to automatically impart rotation of the tool assembly 200 about the pivot 201 to align the facing orientation of the tool assembly 200 with the drive assembly 54 rotational axis X working positions for tire and wheel assemblies of different diameters.

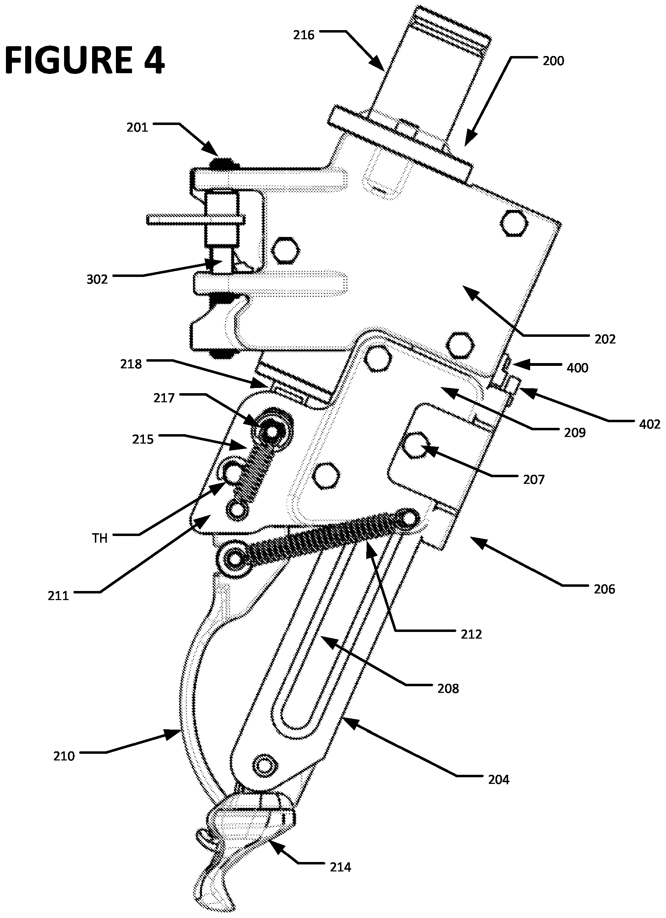

It will further be recognized that movement of the various articulating elements of the tire changer of the present invention should be constrained or prevented during certain operating conditions as a safety measure. Accordingly, the tool assembly 200 includes, in one configuration, a position detector comprising a sensor 400 and a trigger 402. The sensor 400 is located on the mounting bracket 202 of the tool assembly 200, adjacent to the guide member 204, while the trigger 402 is carried on the outer flange plates 209 of the demount tool assembly 206. When the demount tool assembly 206 is returned to a rest position as shown in Figures 3 and 4, the trigger 402 is positioned within operative proximity of the sensor 400. An output from the sensor 400 is conveyed to a control logic circuit (not shown) of the tire changer, which is configured either with software instructions, or electronic lockouts, to prevent one or more movements of the tool assembly 200, support column 100, drive assembly 54, or other tools of the tire changer under predetermined operating conditions. For example, the control logic may be configured to prevent the drive assembly 54 from linear motion in the absence of an output from the sensor 400, indicating that the tire hook is in an extended position and potentially engaged with a wheel assembly secured to the drive assembly 54.

The present invention can be embodied in-part in the form of computer-implemented processes and apparatuses for practicing those processes. The present invention can also be embodied in-part in the form of computer program code containing instructions embodied in tangible media, or another computer readable non-transitory storage medium, wherein, when the computer program code is loaded into, and executed by, an electronic device such as a computer, micro-processor or logic circuit, the device becomes an apparatus for practicing the present invention.

The present invention can also be embodied in-part in the form of computer program code, for example, whether stored in a non-transitory storage medium, loaded into and/or executed by a computer, or transmitted over some transmission medium, wherein, when the computer program code is loaded into and executed by a computer, the computer becomes an apparatus for practicing the present invention. When implemented in a general-purpose microprocessor, the computer program code segments configure the microprocessor to create specific logic circuits.

As various changes could be made in the above constructions without departing from the scope of the invention, it is intended that all matter contained in the above description or shown in the accompanying drawings shall be interpreted as illustrative and not in a limiting sense. The application is only limited by the scope of the appended claims.

## Claims

1. A tire changer (50) for changing a tire on a wheel rim, the tire changer (50) comprising:
a base (52);
a drive assembly (54) coupled to said base and configured to rotate the wheel rim and an associated tire about a rotational axis (X1);
a support column secured to said base (100);
a tool arm (102) coupled to said support column at a fixed orientation;
a tool assembly (200) coupled to the tool arm, the tool assembly including a mounting bracket (202) secured to said tool arm, a guide member (204) rigidly couple to said mounting bracket at a first end, and a demount tool assembly (206) carried on said guide member;
wherein said demount tool assembly is engaged with said guide member for linear motion along said guide member; and
wherein said demount tool assembly holds a demount tool (210) biased for pivoting movement about a pivot axis (TH), said demount tool in sliding contact with a mount/demount head (214) at a second end of said guide member opposite said mounting bracket, whereby said demount tool is held in a retracted position when said demount tool assembly is adjacent said first end of said guide member, and whereby said demount tool is biased to pivot about said pivot axis towards an extended position relative to the mount/demount head when said demount tool assembly is adjacent said second end of said guide member; **characterized in that**
said drive assembly is configured for linear movement relative to said base along a movement path (56) offset from said support column, between a mounting position and a working position for said tire and wheel assembly; and
said support column is configured for rotational movement about a vertical axis (X2), said rotational movement responsive to said working position for said tire and wheel assembly.

2. The tire changer of claim 1 wherein a linear actuator (216) is coupled between said mounting bracket and said demount tool assembly, said linear actuator configured to impart said linear motion to said demount tool assembly along said guide member.

3. The tire changer of either claim 1 or 2 wherein said linear actuator is either a hydraulic cylinder or a pneumatic cylinder, having one end coupled to said mounting bracket, and an opposite end coupled to said demount tool assembly.

4. The tire changer of any of claims 1-3 wherein said demount tool is secured for pivoting movement about said pivot axis by a retention pin (217) coupled between a pair of inner flange plates (211); and
wherein a pair of rollers (207) coupled between a pair of outer flange plates (209) each pass through a linear slot (208) within said guide member, whereby linear motion of said demount tool assembly along said guide member is constrained by said pair of rollers within said linear slot.

5. The tire changer of any of claims 1-4 wherein said demount tool is biased to pivot about said pivot axis by at least one spring (212) and to maintain a sliding contact with said mount/demount head.

6. The tire changer of any of claims 1-5 wherein said demount tool is biased to pivot about said pivot axis by a pair of springs (212), each spring coupled between said demount tool and said demount tool assembly on opposite sides of said guide arm.

7. The tire changer of any of claims 1-6 wherein said guide member is oriented at an acute angle relative to said tool arm.

8. The tire changer of any of claims 1-3 wherein said demount tool is secured for pivoting movement about said pivot axis by a retention pin (217) coupled between a pair of inner flange plates (211); and
wherein said inner flange plates are secured in sliding engagement with said guide member, whereby linear motion of said demount tool assembly along said guide member is constrained by interaction between said inner flange plates and said guide member.

9. The tire changer of any of claims 1-8 wherein said demount tool assembly is pivotally connected to said tool arm at a first pivot (201), and wherein said demount tool assembly is pivotally connected to a steering linkage (300) at a second pivot (302), said steering linkage coupled to said support column by an offset arm (306) at an end opposite said second pivot, whereby rotation of said support column displaces said steering linkage relative to said tool arm to rotate said tool assembly about said first pivot to maintain a facing orientation of said demount tool assembly towards said rotational axis (X1) of said tire and wheel assembly at said working position.

10. The tire changer of claim 9 wherein said working position of said rotational axis (X1) is associated with a diameter of said tire and wheel assembly.

11. The tire changer of either claim 9 or claim 10 wherein said tool assembly is spring biased for rotation about said first pivot.

12. The tire changer of any of claims 1-10 further including a position sensor (400) associated with said demount tool assembly, said position sensor generating a signal responsive to a position of said demount tool assembly along said guide member.

## Patentansprüche

1. Reifenwechselmaschine (50) zum Wechseln eines Reifens auf einer Felge, wobei die Reifenwechselmaschine (50) umfasst:
eine Basis (52);
eine Antriebseinheit (54), die mit dieser Basis verbunden ist und dazu dient, die Felge und den zugehörigen Reifen um eine Drehachse (X1) zu drehen;
eine an der Basis (52) befestigte Stützsäule;
einen Werkzeugarm (102), der in fester Ausrichtung mit der Stützsäule verbunden ist;
eine Werkzeuganordnung (200), die mit dem Werkzeugarm verbunden ist und eine an dem Werkzeugarm befestigte Halterung (202), ein an einem ersten Ende fest mit der Halterung verbundenes Führungselement (204) sowie eine auf dem Führungselement angebrachte Demontagewerkzeuganordnung (206) umfasst;
wobei die Demontagewerkzeuganordnung mit dem Führungselement für eine lineare Bewegung entlang dieses Führungselements in Eingriff steht; und
wobei die Demontagewerkzeuganordnung ein Demontagewerkzeug (210) hält, das für eine Schwenkbewegung um eine Schwenkachse (TH) vorgespannt ist, wobei das Demontagewerkzeug in gleitendem Kontakt mit einem Montage-/Demontagekopf (214) an einem zweiten Ende des Führungselements gegenüber der Montagehalterung steht, wobei das Demontagewerkzeug in einer zurückgezogenen Position gehalten wird, wenn die Demontagewerkzeuganordnung an das erste Ende des Führungselements angrenzt und wobei das Demontagewerkzeug so vorgespannt ist, dass es sich um die Drehachse in Richtung einer ausgefahrenen Position relativ zum Montage-/Demontagekopf dreht, wenn die Demontagewerkzeuganordnung an das zweite Ende des Führungselements angrenzt;
**dadurch gekennzeichnet, dass**
die Antriebseinheit für eine lineare Bewegung relativ zur Basis entlang eines Bewegungspfades (56) konfiguriert ist, der von der Stützsäule zwischen einer Montageposition und einer Arbeitsposition für die Reifen- und Radbaugruppe versetzt ist; und
die Stützsäule für eine Drehbewegung um eine vertikale Achse (X2) ausgelegt ist, wobei die Drehbewegung auf die Arbeitsposition der Reifen- und Radbaugruppe reagiert.

2. Reifenwechselmaschine gemäß Anspruch 1, worin ein Linear-Aktuator (216) zwischen der Montagehalterung und der seitlichen Demontagewerkzeuganordnung gekoppelt ist, wobei der Linear-Aktuator so konfiguriert ist, dass er die lineare Bewegung auf die Demontagewerkzeuganordnung entlang des Führungselements überträgt.

3. Reifenwechselmaschine nach Anspruch 1 oder 2, wobei der Linear-Aktuator entweder ein hydraulischer Zylinder oder ein pneumatischer Zylinder ist, dessen eines Ende mit der Montagehalterung und dessen anderes Ende mit der Demontagewerkzeuganordnung verbunden ist.

4. Reifenwechselmaschine nach einem der Ansprüche 1-3, wobei das Demontagewerkzeug mittels eines zwischen zwei inneren Flanschplatten (211) angeordneten Haltestifts (217) für eine Schwenkbewegung um die Schwenkachse gesichert ist; und wobei zwei zwischen zwei äußeren Flanschplatten (209) angeordnete Rollen (207) jeweils durch einen linearen Schlitz (208) innerhalb des Führungselements verlaufen, wobei die lineare Bewegung der Demontagewerkzeuganordnung entlang des Führungselementes durch das Rollenpaar innerhalb der linearen Nut eingeschränkt wird.

5. Reifenwechselmaschine nach einem der Ansprüche 1-4, wobei das Demontagewerkzeug durch mindestens eine Feder (212) so vorgespannt ist, dass es sich um die Drehachse drehen kann und einen Gleitkontakt mit dem Montage-/Demontagekopf aufrechterhält.

6. Reifenwechselmaschine nach einem der Ansprüche 1-5, wobei das Demontagewerkzeug durch ein Paar Federn (212) so vorgespannt ist, dass es sich um die Drehachse drehen kann, wobei jede Feder zwischen dem Demontagewerkzeug und der Demontagewerkzeuganordnung auf gegenüberliegenden Seiten des Führungsarms angebracht ist.

7. Reifenwechselmaschine nach einem der Ansprüche 1-6, wobei das Führungselement in einem spitzen Winkel relativ zu dem Führungsarm ausgerichtet ist.

8. Reifenwechselmaschine nach einem der Ansprüche 1.3, wobei das Demontagewerkzeug für eine Schwenkbewegung um die Schwenkachse mittels eines Haltestifts (217), der zwischen zwei inneren Flanschplatten (211) eingerastet ist, gesichert ist; und
wobei die inneren Flanschplatten in gleitendem Eingriff mit dem Führungselement gesichert sind, wodurch die lineare Bewegung der Demontagewerkzeuganordnung entlang des Führungselements durch die Wechselwirkung zwischen den inneren Flanschplatten und dem Führungselement eingeschränkt wird.

9. Reifenwechselmaschine nach einem der Ansprüche 1-8, wobei das Demontagewerkzeug an einem ersten Drehpunkt (201) schwenkbar mit dem Werkzeugarm verbunden ist, und wobei die Demontagewerkzeuganordnung über einen zweiten Drehpunkt (302) schwenkbar mit einem Lenkgestänge (300) verbunden ist, wobei das Lenkgestänge über einen versetzten Arm (306) mit der Stützsäule gekoppelt ist, an einem Ende gegenüber dem zweiten Drehpunkt,
wobei die Drehung der genannten Stützsäule die Lenkverbindung zum Werkzeugarm verschiebt, um die Werkzeuganordnung um den ersten Drehpunkt zu drehen und so eine Ausrichtung der Demontagewerkzeuganordnung zur Drehachse (X1) beizubehalten, die mit einem Durchmesser der Reifen- und Radanordnung verbunden ist.

10. Reifenwechselmaschine nach Anspruch 9, wobei die Arbeitsposition der Rotationsachse (X1) mit einem Durchmesser der Reifen- und Radanordnung zusammenhängt.

11. Reifenwechselmaschine nach Anspruch 9 oder Anspruch 10, wobei die Werkzeuganordnung durch eine Feder zur Drehung um den ersten Drehpunkt vorgespannt ist.

12. Reifenwechselmaschine nach einem der Ansprüche 1-10, ferner umfassend einen Positionssensor (400) in Verbindung mit der Demontagewerkzeugbaugruppe, wobei der Positionssensor ein Signal erzeugt, das auf die Position der Demontagewerkzeugbaugruppe entlang des Führungselements reagiert.

## Revendications

1. Machine à changer les pneus (50) pour changer un pneu sur une jante de roue, la machine à changer les pneus (50) comprenant :
une base (52) ;
un ensemble d'entraînement (54) couplé à ladite base et configuré pour faire tourner la jante de roue et un pneu associé autour d'un axe de rotation (X1) ;
une colonne de support fixée à ladite base (100) ;
un bras d'outil (102) couplé à ladite colonne de support selon une orientation fixe ;
un ensemble (200) d'outil couplé au bras d'outil, l'ensemble d'outil incluant un socle de montage (202) fixé audit bras d'outil, un organe de guidage (204) se couplant rigidement audit socle de montage à une première extrémité, et un ensemble (206) d'outil de démontage porté sur ledit organe de guidage ;
dans laquelle ledit ensemble d'outil de démontage est engagé avec ledit organe de guidage pour un mouvement linéaire le long dudit organe de guidage ; et
dans laquelle ledit ensemble d'outil de démontage maintient un outil de démontage (210) sollicité pour un mouvement de pivotement autour d'un axe pivot (TH), ledit outil de démontage étant en contact glissant avec une tête de montage/démontage (214) à une seconde extrémité dudit organe de guidage, opposée audit socle de montage, moyennant quoi ledit outil de démontage est maintenu dans une position rétractée lorsque ledit ensemble d'outil de démontage est adjacent à ladite première extrémité dudit organe de guidage, et moyennant quoi ledit outil de démontage est sollicité pour pivoter autour dudit axe pivot vers une position étendue par rapport à la tête de montage/démontage lorsque ledit ensemble d'outil de démontage est adjacent à ladite seconde extrémité dudit organe de guidage ; **caractérisée en ce que**
ledit ensemble d'entraînement est configuré pour un mouvement linéaire par rapport à ladite base le long d'une trajectoire de mouvement (56) décalée par rapport à ladite colonne de support, entre une position de montage et une position de travail pour ledit ensemble pneu et roue ; et
ladite colonne de support est configurée pour un mouvement de rotation autour d'un axe vertical (X2), ledit mouvement de rotation répondant à ladite position de travail pour ledit ensemble pneu et roue.

2. Machine à changer les pneus selon la revendication 1, dans laquelle un actionneur linéaire (216) est couplé entre ledit socle de montage et ledit ensemble d'outil de démontage, ledit actionneur linéaire étant configuré pour conférer ledit mouvement linéaire audit ensemble d'outil de démontage le long dudit organe de guidage.

3. Machine à changer les pneus selon l'une ou l'autre de la revendication 1 ou de la revendication 2, dans laquelle ledit actionneur linéaire est soit un vérin hydraulique, soit un vérin pneumatique, ayant une extrémité couplée audit socle de montage, et une extrémité opposée couplée audit ensemble d'outil de démontage.

4. Machine à changer les pneus selon l'une quelconque des revendications 1 à 3, dans laquelle ledit outil de démontage est fixé pour un mouvement de pivotement autour dudit axe pivot par une goupille de retenue (217) couplée entre une paire de plaques à bride interne (211) ; et
dans laquelle une paire de rouleaux (207) couplée entre une paire de plaques à bride externe (209) passent chacune à travers une fente linéaire (208) au sein dudit organe de guidage, moyennant quoi un mouvement linéaire dudit ensemble d'outil de démontage le long dudit organe de guidage est contraint par ladite paire de rouleaux au sein de ladite fente linéaire.

5. Machine à changer les pneus selon l'une quelconque des revendications 1 à 4, dans laquelle ledit outil de démontage est sollicité pour pivoter autour dudit axe pivot par au moins un ressort (212) et pour maintenir un contact glissant avec ladite tête de montage/démontage.

6. Machine à changer les pneus selon l'une quelconque des revendications 1 à 5, dans laquelle ledit outil de démontage est sollicité pour pivoter autour dudit axe pivot par une paire de ressorts (212), chaque ressort étant couplé entre ledit outil de démontage et ledit ensemble d'outil de démontage sur des côtés opposés dudit bras de guidage.

7. Machine à changer les pneus selon l'une quelconque des revendications 1 à 6, dans laquelle ledit organe de guidage est orienté selon un angle aigu par rapport audit bras d'outil.

8. Machine à changer les pneus selon l'une quelconque des revendications 1 à 3, dans laquelle ledit outil de démontage est fixé pour un mouvement de pivotement autour dudit axe pivot par une goupille de retenue (217) couplée entre une paire de plaques à bride interne (211) ; et
dans laquelle lesdites plaques à bride interne sont fixées en engagement glissant avec ledit organe de guidage, moyennant quoi un mouvement linéaire dudit ensemble d'outil de démontage le long dudit organe de guidage est contraint par une interaction entre lesdites plaques à bride interne et ledit organe de guidage.

9. Machine à changer les pneus selon l'une quelconque des revendications 1 à 8, dans laquelle ledit ensemble d'outil de démontage est relié à pivotement audit bras d'outil au niveau d'un premier pivot (201), et dans laquelle ledit ensemble d'outil de démontage est relié à pivotement à une timonerie de direction (300) au niveau d'un second pivot (302), ladite timonerie de direction étant couplée à ladite colonne de support par un bras décalé (306) à une extrémité opposée audit second pivot, moyennant quoi une rotation de ladite colonne de support déplace ladite timonerie de direction par rapport audit bras d'outil pour faire tourner ledit ensemble d'outil autour dudit premier pivot pour maintenir une orientation en regard dudit ensemble d'outil de démontage vers ledit axe de rotation (X1) dudit ensemble pneu et roue à ladite position de travail.

10. Machine à changer les pneus selon la revendication 9, dans laquelle ladite position de travail dudit axe de rotation (X1) est associée à un diamètre dudit ensemble pneu et roue.

11. Machine à changer les pneus selon la revendication 9 ou la revendication 10, dans laquelle ledit ensemble d'outil est sollicité par ressort pour une rotation autour dudit premier pivot.

12. Machine à changer les pneus selon l'une quelconque des revendications 1 à 10 incluant en outre un capteur de position (400) associé audit ensemble d'outil de démontage, ledit capteur de position générant un signal répondant à une position dudit ensemble d'outil de démontage le long dudit organe de guidage.
